# EUROPÄISCHE PATENTSCHRIFT

(11) **EP 3 718 911 B1**
(45) Veröffentlichungstag und Bekanntmachung des Hinweises auf die Patenterteilung: **13.10.2021**
(21) Anmeldenummer: 19405006.8
(22) Anmeldetag: 05.04.2019
(51) Int. Cl.: B65B 69/00, B65G 69/18

(54) **UMFÜLLVORRICHTUNG ZUM KONTAMINATIONSGESCHÜTZTEN ÜBERLEITEN VON FLIESSFÄHIGEM PROZESSMATERIAL ZWISCHEN EINEM ERSTEN UND EINEM ZWEITEN BEHÄLTNIS**
DECANTING DEVICE FOR TRANSFERRING FLOWABLE PROCESS MATERIAL BETWEEN A FIRST AND A SECOND CONTAINER WHILE PROTECTED AGAINST CONTAMINATION
DISPOSITIF DE TRANSVASEMENT PERMETTANT DE TRANSFÉRER DE MANIÈRE PROTÉGÉE CONTRE LA CONTAMINATION D'UN MATÉRIAU DE PROCESSUS COULANT ENTRE UN PREMIER ET UN SECOND RÉCIPIENTS

(43) Veröffentlichungstag der Anmeldung: 07.10.2020
(73) Patentinhaber: Rubitec AG, 4431 Bennwil (CH)
(72) Erfinder: Rubitschung, Christoph, 4432 Lampenberg (CH)
(74) Vertreter: Troesch Scheidegger Werner AG

(56) Entgegenhaltungen:
- EP-A1- 3 000 739
- EP-A1- 3 041 749
- DE-U1- 20 105 740
- GB-A- 2 292 735

## Beschreibung

### Anwendungsgebiet der Erfindung

Die vorliegende Erfindung betrifft eine Umfüllvorrichtung zum kontaminationsgeschützten Überleiten von fliessfähigem Prozessmaterial zwischen einem ersten Behältnis und einem zweiten Behältnis. Die Umfüllvorrichtung besitzt eine das Prozessmaterial durch einen Axialdurchgang durchleitende Leitröhre, welche an einem Ende ein Anschlussmittel hat und am anderen Ende mit einem Röhrenrand abschliesst. In die Leitröhre mündet eine Transfereinheit ein, welche den Eingriff in die Leitröhre erlaubt und auf der von einem schlauchförmigen Linervorrat zumindest ein mit einer ersten Abcrimpung versehener abziehbarer Nutzabschnitt gespeichert ist. Ein erster Spanner hat die temporäre Funktion, ein Restende eines von einem vorherigen Umfüllvorgang stammenden Linerrests, der eine Sackform bildend, am anderen Ende mit einer zweiten Abcrimpung verschlossen ist, oder das freie offene Ende des neuen Linerstücks abgedichtet zu fixieren. Ein zweiter Spanner, der zirkulär an der Leitröhre und konzentrisch zum ersten Spanner angeordnet ist, hat die temporäre Funktion, das Restende oder das freie Ende des neuen Linerstücks abgedichtet zu fixieren. Das neue Linerstück führt als sackförmiger Innenliner in das zweite Behältnis, welches ein Bigbag, ein Fass oder ein Container sein kann, während das erste Behältnis ein Fass oder Container oder Bestandteil einer Produktionsanlage ist und direkt abgedichtet an die Leitröhre angeschlossen ist. Das Prozessmaterial kann von sensibler Natur sein - z.B. eine pharmazeutische Komponente - und darf weder von der äusseren Umgebung verunreinigt werden noch in die Umgebung gelangen.

### Stand der Technik

Gegenstand der CH 699 603 A2 sind ein Verfahren und eine zugehörige Vorrichtung zum kontaminationsarmen Umfüllen von Füllgut aus einem ersten Behälter in einen zweiten Behälter. Der erste Behälter hat eine Umhüllung, welche in einen Auslauf mündet, der mit einem ersten Verschluss versehen ist. Über den ersten Verschluss hinaus erstreckt sich in Fortsetzung der Umhüllung ein flexibler Fortsatz. Zwischen dem ersten Behälter und dem zweiten Behälter ist eine Abfüllvorrichtung mit einer Röhre angeordnet. Die Röhre ist zum Durchfluss des Füllguts beim Umfüllen aus dem ersten Behälter in den zweiten Behälter und auf ihrem Aussenumfang zur Bevorratung eines folienförmigen Endlosliners bestimmt. Eine zweite Dichtstelle wird aus einer Anordnung mit einer aktivierbaren Dichtung, einem über den Aussenumfang der Dichtung geführten flexiblen Fortsatz der Folie, einem im Bereich der Dichtung äusserlich über den flexiblen Fortsatz der Folie geführten flexiblen Fortsatz der Umhüllung und einem im Bereich der Dichtung äusserlich über den flexiblen Fortsatz aufgebrachten ersten Spannelement gebildet.

Die EP 1 958 900 B1 offenbart ein Verfahren zur Entleerung eines an einen ersten Behälter angeschlossenen Liners. Die dazu eingesetzte Vorrichtung hat eine kammerförmige Leitröhre und eine obere Öffnung, durch die der erste Behälter in die Leitröhre entleerbar ist. Durch die untere Öffnung fliesst das Prozessmaterial in einen zweiten Behälter. Zur Befestigung des Liners ist an der oberen Öffnung eine erste Befestigungsvorrichtung vorhanden. Mittels eines Dichtflansches lässt sich der Liner an der Öffnung abgedichtet anbringen, wobei ein Hebel zum Abheben und Anlegen des Dichtflanschs von und an die Öffnung dient. Die Leitröhre hat einen Eingriff mit einer zweiten Befestigungsvorrichtung für einen Foliensack oder eine Endlosschlauchfolie. An der ersten Befestigungsvorrichtung sind zwei zirkulär um die Leitröhre umlaufende, untereinander liegende Spanner vorgesehen, in welchen die freien Enden des Liners bzw. ein Linerrest vom vorherigen Umfüllvorgang fixiert sind. Die zweite Befestigungsvorrichtung hat zwei zirkulär um die Leitröhre umlaufende, nebeneinander liegende Spanner, die der Fixierung eines nach aussen geschlossenen Foliensacks bzw. eines zweiten, mit einer Abcrimpung verschlossenen Folienrests, dienen. Während des Umfüllvorgangs macht sich nach dem Ausschleusen des zweiten und anschliessend des ersten Linerrests jeweils ein Umhängen des Foliensacks an der zweiten Befestigungsvorrichtung sowie des Liners an der ersten Befestigungsvorrichtung erforderlich. Dieses Handling ist etwas umständlich und verursacht ein nicht unkritisches zweimaliges Öffnen des Systems.

Die WO 2013/050 968 A1 betrifft ein Verfahren zur kontaminationsvermeidenden Befüllung eines Behälters mit einem hülsenförmigen Anschlussbereich, wobei eine Hülsenverbindung zwischen dem Anschlussbereich und einer Transferhülse erstellt wird. Es wird dazu ein Montagering vorgesehen und der freie Endbereich des Anschlussbereichs durch den Montagering hindurchgeführt. Dann wird der freie Endbereich des Anschlussbereichs um den Montagering umgefaltet. Das erste Ende der Transferhülse wird über den umgefalteten Endbereich des Anschlussbereichs des Behälters und den Montagering gestülpt. Nun wird ein Fixierelement zur Fixierung der Transferhülse an dem Anschlussbereich des Behälters vorgesehen. Nach dem Erstellen der Hülsenverbindung wird das zweite Ende der Transferhülse an einem Befüllungsstutzen eines Containers angeordnet und dann der Behälter befüllt. Eine Spannvorrichtung dient zur Durchführung des Verfahrens.

In der WO 2010/134 102 A1 wird eine Vorrichtung und ein zugehöriges Verfahren zur Entleerung eines Pulverprodukts aus einem Vorratsbehälter durch ein Durchleitungsrohr in ein Empfängerbehältnis vorgeschlagen. Ein schlauchförmiges Linerstück ist oben an die Austrittsöffnung des Vorratsbehälters und unten mittels einer die Eintrittsöffnung des Durchleitungsrohrs umrahmenden Befestigungseinheit angeschlossen. Das die Austrittsöffnung und die Eintrittsöffnung überbrückende Zwischenteil des Linerstücks weist Handschuheingriffe auf. Die Befestigungseinheit besteht aus einer oberen feststehenden Halterung und einer darunter angeordneten axial an die obere Halterung heranschiebbaren unteren Halterung. Je nach Betriebsphase werden durch Ansaugöffnungen mittels Unterdruck in einer oder beiden Halterungen das aktuell aufgespannte Linerstück temporär zusammen mit einem abgetrennten, oben verschlossenen Linerrest fixiert. Über die Handschuheingriffe des aktuellen Linerstücks lässt sich der dann von der Befestigungseinheit frei gegebene Linerrest ausschleusen. Während des Entleerungsvorgangs ist das aktuelle Linerstück zusätzlich auf dem Rand der Eintrittsöffnung mittels eines Klemmrings aufgepresst.

Schliesslich bezieht sich die EP 3 041 749 B1 auf eine Vorrichtung zum Umfüllen von Prozessmaterial zwischen einem ersten Behältnis und einem zweiten Behältnis. Vorgesehen ist zumindest eine Spanneinheit, die einen ersten Spanner und einen zweiten Spanner aufweist, die voneinander unabhängig betätigbar sind. Die zumindest eine Spanneinheit ist dazu bestimmt, temporär abgedichtet zu fixieren:
- allein einen der betreffenden Spanneinheit zugewandten Endabschnitt eines schlauchförmigen Linerstücks, das sich indirekt zwischen den Behältnissen erstreckt, um den Übergang zwischen den Behältnissen nach aussen abzudichten;
- allein einen der betreffenden Spanneinheit zugewandten Endabschnitt eines von einem vorherigen Umfüllvorgang stammenden schlauchförmigen Linerrests, der am anderen Ende mit einer ersten Abcrimpung verschlossen ist; und
- den einen Endabschnitt des Linerstücks zugleich mit dem einen Endabschnitt des von einem vorherigen Umfüllvorgang stammenden Linerrests, wobei:
   beide Spanner der jeweiligen Spanneinheit, dazu bestimmt sind, temporär gemeinsam den zugewandten Endabschnitt des Linerstücks oder gemeinsam den zugewandten Endabschnitt des von einem vorherigen Umfüllvorgang stammenden Linerrests abgedichtet zu fixieren. Beide Spanner der jeweiligen Spanneinheit sind zirkulär und in Relation zur Längsstreckung des Linerstücks zueinander konzentrisch angeordnet.

### Aufgabe der Erfindung

In Relation zu den bisher bekannten Vorrichtungen und praktizierten Verfahren liegt der Erfindung die Aufgabe zugrunde, eine Umfüllvorrichtung zum kontaminationsgeschützten Überleiten von fliessfähigem Prozessmaterial zwischen einem ersten und einem zweiten Behältnis mit weiter verbesserter Dichtheit zu schaffen.

### Übersicht über die Erfindung

Die Umfüllvorrichtung zum kontaminationsgeschützten Überleiten von fliessfähigem Prozessmaterial zwischen einem ersten Behältnis und einem zweiten Behältnis hat eine Leitröhre, durch deren Axialdurchgang das Prozessmaterial fliesst. An der Leitröhre sind an einem Ende Anschlussmittel vorgesehen und am anderen Ende ein abschliessender Röhrenrand. Zur Umfüllvorrichtung gehört ferner eine in die Leitröhre einmündende Transfereinheit, welche den Eingriff in die Leitröhre erlaubt und auf der von einem schlauchförmigen Linervorrat zumindest ein mit einer ersten Abcrimpung versehener abziehbarer Nutzabschnitt gespeichert ist.

Ein erster Spanner hat die Funktion temporär abgedichtet zu fixieren:
- ein Restende eines von einem vorherigen Umfüllvorgang stammenden Linerrests, der eine Sackform bildend, am anderen Ende mit einer zweiten Abcrimpung verschlossen ist; oder
- ein freies offenes Ende eines neuen Linerstücks, das als sackförmiger Innenliner in das zweite Behältnis führt.

Ein zweiter Spanner, der zirkulär an der Leitröhre und konzentrisch zum ersten Spanner angeordnet ist, hat die Funktion das Restende oder das freie Ende des neuen Linerstücks temporär abgedichtet zu fixieren.

Weiterer Wesensbestandteil der Umfüllvorrichtung ist eine axial gemäss Längserstreckung der Leitröhre an einem Hubgestänge verfahrbare Anpresseinheit mit einem Axialdurchgang, um innerlich temporär den Linerrest und/oder das neue Linerstück aufzunehmen. Die Anpresseinheit besitzt eine Dichtung, welche die temporäre Funktion hat, allein das am Röhrenrand anliegende Restende oder dieses zusammen mit dem daran liegenden freien Ende des neuen Linerstücks oder allein das am Röhrenrand anliegende freie Ende des neuen Linerstücks abgedichtet zu fixieren. Ein Basisteil der Anpresseinheit ist fest mit dem Hubgestänge verbunden, und am Basisteil stützt sich mittels einer Federung elastisch ein Pressteil ab, an dem die Dichtung angeordnet ist.

Nachstehend sind besonders vorteilhafte Details der Umfüllvorrichtung angegeben: Die Anpresseinheit umfasst ferner ein aktivierbares Stopfelement, welches dazu dient, das freie Ende des neuen Linerstücks in den ersten Spanner in Schleifenform einzufalzen.

Das Hubgestänge ist dazu bestimmt, durch Verfahren des Basisteils die am Pressteil angeordnete Dichtung, je nach Arbeitsphase der Umfüllvorrichtung:
- gänzlich vom Röhrenrand wegzubewegen, um das freie Ende eines neuen Linerstücks durch dem Axialdurchgang der Anpresseinheit in den zweiten Spanner einzuführen; oder
- nur mit mässigem Druck das am Röhrenrand anliegende freie Ende des neuen Linerstücks angedichtet zu fixieren; oder
- nur mit mässigem Druck das am Röhrenrand anliegende Restende zusammen mit dem daran liegenden freien Ende des neuen Linerstücks angedichtet zu fixieren, so dass ein bereits aus dem zweiten Spanner gelöstes und nur mehr im ersten deaktivierten Spanner klemmendes Restende herausziehbar ist; oder
- mit maximalen Druck das am Röhrenrand anliegende Restende oder das am Röhrenrand anliegende freie Ende des neuen Linerstücks angedichtet zu fixieren.

An der Anpresseinheit ist die maximale Länge des Weges der Federung einstellbar, z.B. mittels justierbarer Anschläge. Die Funktion zumindest eines der beiden Spanner basiert auf Eigenelastizität oder einer Ansteuerung von aussen. Der erste Spanner ist als mit Mediendruck zu beaufschlagende, aktivierbare Blähdichtung ausgebildet oder weist eigenelastische Klemmbacken auf. Der zweite Spanner ist als eine in geschlossenem Zustand verengte und im offenen Zustand aufgeweitete Klammer beschaffen, die einen manuell betätigbaren Verschluss hat.

Der Nutzabschnitt liegt bis zu seiner Verwendung in der Transfereinheit und mit seiner ersten Abcrimpung hin zur Mündung in der Leitröhre. Von einem Stopfen, der sich von aussen in die Transfereinheit einführen lässt, ist der Nutzabschnitt an die Mündung heran vorgeschoben. Der Stopfen ist aus der Transfereinheit herausziehbar und mit einem vorsetzbaren Deckel verbunden. Die Transfereinheit ist in der Form eines von der Leitröhre abgehenden Seitenstutzens ausgebildet und mündet mit Gefälle mit einer Durchgangsöffnung in eine Wandung der Leitröhre.

Der vom Linervorrat zur Verwendung gezogene Nutzabschnitt lässt sich durch die Transfereinheit in den Axialdurchgang der Leitröhre einbringen. Dieser Nutzabschnitt ist dazu bestimmt:
- den von einem vorherigen Umfüllvorgang stammenden Linerrest, welcher nur mehr im ersten deaktivierten Spanner und zwischen dem Röhrenrand und dem freien Ende eines neuen Linerstücks abgedichtet von der mässig andrückenden Dichtung der Anpresseinheit herausziehbar hängt, zuerst zu ergreifen, isoliert zu ummanteln und nach aussen zu überführen; und schliesslich
- im vollständig aus der Transfereinheit herausgezogenem Zustand mit dem darin enthaltenen Linerrest, abseits vom eingeschlossenen Linerrest, mit einer neuen ersten Abcrimpung sowie einer dazu nahen dritten Abcrimpung versehen zu werden, um zwischen den Abcrimpungen den gebrauchten Nutzabschnitt mit dem Linerrest abzutrennen und zu entsorgen; womit
- ein neuer Nutzabschnitt mit neuer erster Abcrimpung entsteht, der sich mittels des Stopfens in die Ausgangslage bringen lässt und so für einen nächsten Umfüllvorgang verfügbar ist.

Das erste Behältnis ist abgedichtet direkt an ein Anschlussmittel der Leitröhre der Umfüllvorrichtung angeschlossen und ist ein Container oder ein Bestandteil einer Produktionsanlage, wobei durch die Umfüllvorrichtung geleitet, aus dem ersten Behältnis Prozessmaterial zum zweiten Behältnis überführt werden soll oder das erste Behältnis mit Prozessmaterial aus dem zweiten Behältnis beschickt werden soll. Andererseits hat das zweite Behältnis die Gestalt eines Bigbags oder eines Containers, welcher ein Linerstück als sackförmigen Innenliner enthält, wobei durch die Umfüllvorrichtung geleitet, aus dem zweiten Behältnis Prozessmaterial zum ersten Behältnis zu überführen ist oder das zweite Behältnis mit Prozessmaterial aus dem ersten Behältnis zu beschicken ist.

### Kurzbeschreibung der beigefügten Zeichnungen

Den konstruktiven Aufbau der Umfüllvorrichtung sowie deren sukzessiven Funktionsverlauf zeigen folgende Prinzipdarstellungen:
- Figur 1 -: Erste Phase mit Vorrichtungsaufbau und Endsituation eines Umfüllvorgangs
- Figur 2 -: Zweite Phase
- Figur 3 -: Dritte Phase
- Figur 4 -: Vierte Phase
- Figur 5 -: Fünfte Phase
- Figur 6A -: Sechse Phase
- Figur 6B -: das vergrösserte Detail X1 aus Figur 6A
- Figur 7A -: Siebente Phase
- Figur 7B -: das vergrösserte Detail X2 aus Figur 7A
- Figur 8A -: Achte Phase
- Figur 8B -: das vergrösserte Detail X3 aus Figur 8A
- Figur 9 -: Neunte Phase; und
- Figur 10 -: Zehnte Phase mit Startsituation eines neuen Umfüllvorgangs

### Ausführungsbeispiel

Mit Bezug auf die beiliegenden Zeichnungen erfolgt nachstehend die detaillierte Beschreibung eines Ausführungsbeispiel zum konstruktiven Aufbau der erfindungsgemässen Umfüllvorrichtung und deren sukzessiven Funktionsverlauf im Arbeitsmodus.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit kann auf die wiederholte Bezeichnung von Bauteilen in nachfolgenden Figuren manchmal verzichtet werden, sofern zeichnerisch eindeutig erkennbar ist, dass es sich um "wiederkehrende" Bauteile handelt.

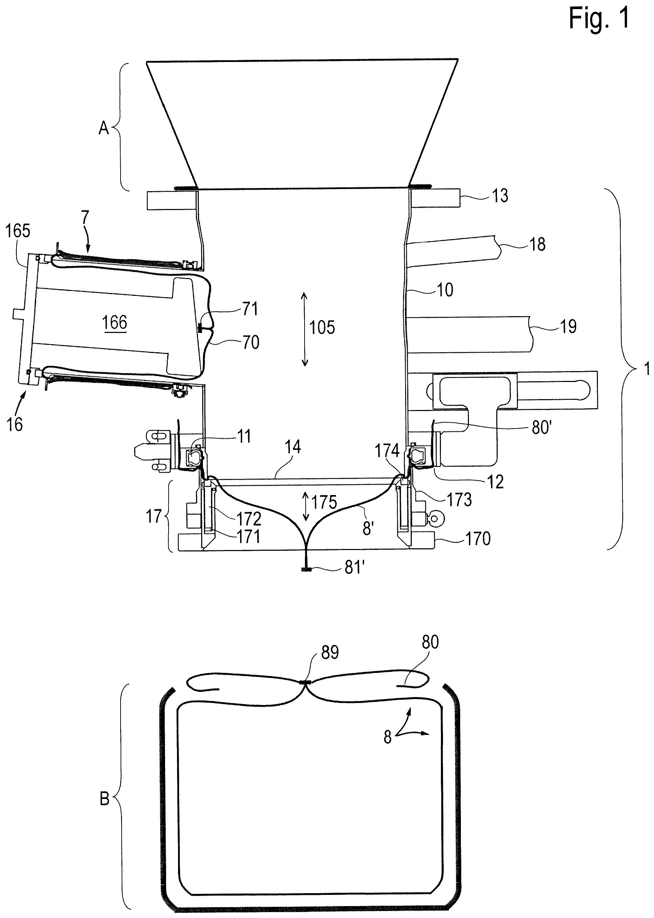

### Figur 1: Vorrichtungsaufbau Erste Phase - Schluss eines Umfüllvorgangs

Das Ausführungsbeispiel geht davon aus, dass aus dem ersten Behältnis **A** ein Prozessmaterial, in Form fliessfähiger Feststoffe, in ein zweites Behältnis **B** mittels der Umfüllvorrichtung **1** kontaminationsgeschützt eingebracht wird. Das erste Behältnis **A** ist direkt abgedichtet an ein Anschlussmittel **13** der Leitröhre **10** der Umfüllvorrichtung **1** angeschlossen und ist ein Container oder ein Bestandteil einer Produktionsanlage. Das zweite Behältnis **B** hat die Gestalt eines Bigbags oder eines Containers, welcher ein Linerstück **8** als sackförmigen Innenliner enthält, dessen freies Ende **80** vor dem Start eines Umfüllvorgangs üblicherweise mit einem Verschluss **89** versehen ist. Die Förderrichtung könnte alternativ vom zweites Behältnis **B** zum ersten Behältnis **A** verlaufen. Der sich durch die Leitröhre **10** erstreckende Axialdurchgang **105** erlaubt den Durchfluss des Prozessmaterials. Am Austrittsende schliesst die Leitröhre **10** mit einem Röhrenrand **14** ab. Zur Leitröhre **10** führen eine Inertgasleitung **13,** zur Beschickung mit Inertgas falls es das spezielle Prozessmaterial erfordert, sowie eine Waschmittelleitung **19** zur Reinigung der Vorrichtung **1.**

In die Leitröhre **10** mündet eine Transfereinheit **16** ein, welche den Eingriff in die Leitröhre **10** erlaubt und auf der von einem schlauchförmigen Linervorrat **7** eine Vielzahl von jeweils mit einer ersten Abcrimpung **71** versehener abziehbarer Nutzabschnitte **70** gespeichert ist. Der aktuelle Nutzabschnitt **70** liegt bis zu seiner Verwendung in der Transfereinheit **16** und mit seiner ersten Abcrimpung **71** hin zur Mündung und ist von einem Stopfen **166** an die Mündung heran vorgeschoben, der sich von aussen in die Transfereinheit **16** einführen lässt. Der Stopfen **166** ist aus der Transfereinheit **16** herausziehbar und mit einem vorsetzbaren Deckel **165** verbunden. Die Transfereinheit **16** ist in der Form eines von der Leitröhre **10** abgehenden Seitenstutzens ausgebildet und mündet mit Gefälle mit einer Durchgangsöffnung in die Wandung der Leitröhre **10.**

Ein erster Spanner **11,** hier in Gestalt einer von aussen momentan aktivierten Blähdichtung, fixiert das eingefalzte Restende **80'** eines von einem vorherigen Umfüllvorgang stammenden Linerrests **8'** abgedichtet. Vom ersten Spanner **11** erstreckt sich das Restende **80'** zum zweiten Spanner **12** und ist auch dort gegenwärtig fest abgedichtet eingespannt. Der zweite Spanner **12** ist z.B. als eine in geschlossenem Zustand verengte und im offenen Zustand aufgeweitete Klammer beschaffen, die einen manuell betätigbaren Verschluss hat.

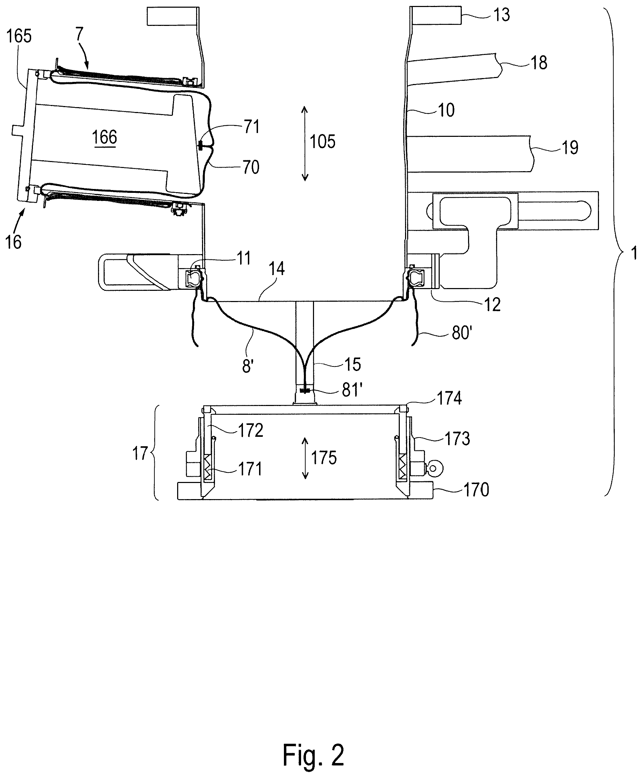

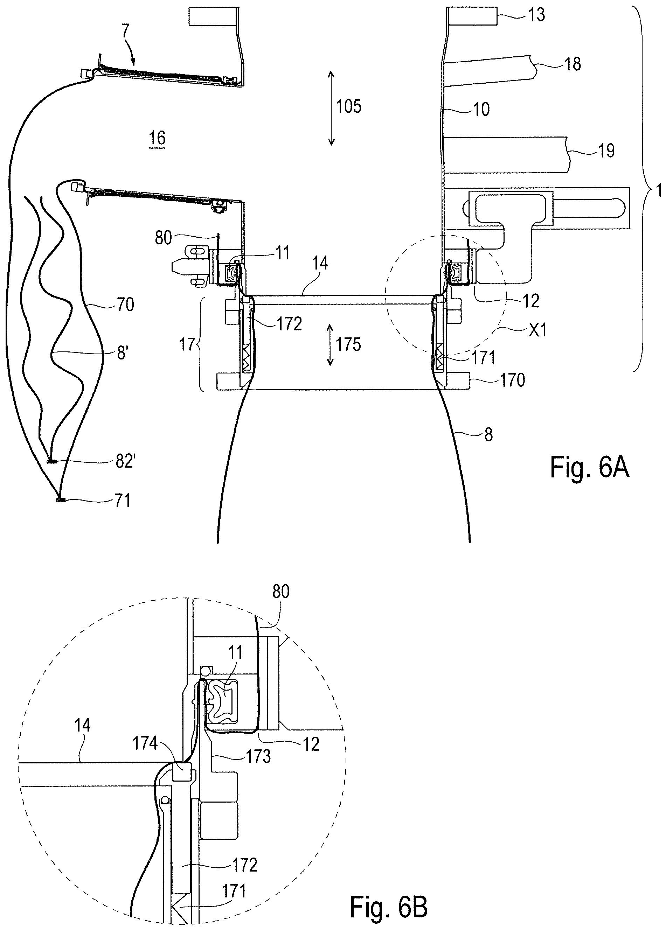

Der Linerrest **8'** unterläuft den Röhrenrand **14** und hängt, zuunterst mit der verschliessenden zweiten Abcrimpung **81'** versehen, sackförmig in den Axialdurchgang **175** einer Anpresseinheit **17.** Mit einem Hubgestänge **15** ist das Basisteil **170** der Anpresseinheit **17** fest verbunden (siehe Figur 2), auf dem sich mittels einer einstellbaren Federung **171** das Pressteil **172** elastisch abstützt. Die Anpresseinheit **17** besitzt ferner ein aktivierbares Stopfelement **173,** welches dazu dient, das freie Ende **80** eines neuen Linerstücks **8** in den ersten Spanner **11** in Schleifenform einzufalzen (siehe Figuren 6A und 6B). In der gegenwärtigen Phase ist das Stopfelement **173** in zurückgezogener Position, wirkt also nicht in den ersten Stopper **11** hinein. Das Basisteil **170** ist maximal an die Leitröhre **10** herangefahren, so wird der Linerrest **8'** von der auf dem Pressteil **172** angeordneten Dichtung **174** gegen den Röhrenrand **14** der Leitröhre **10** fest dichtend angepresst. Die Federung **171** ist zusammengedrückt und so wirkt zusätzlich die über das Hubgestänge **15** ausgeübte Druckkraft auf die Dichtung **174.**

### Figur 2: Zweite Phase

Der erste Spanner **11** bleibt aktiviert, und die Anpresseinheit **17** ist von der Leitröhre **10** weggefahren. Dabei hat sich die Federung **171** maximal entspannt, so schiebt sich der Pressring **172** aus dem Basisteil **170.** Der zweite Spanner **12** ist gelöst, damit lässt sich das dort zuvor eingespannte Restende **80'** des Linerrestes **8'** herausziehen und hängt nun frei herunter.

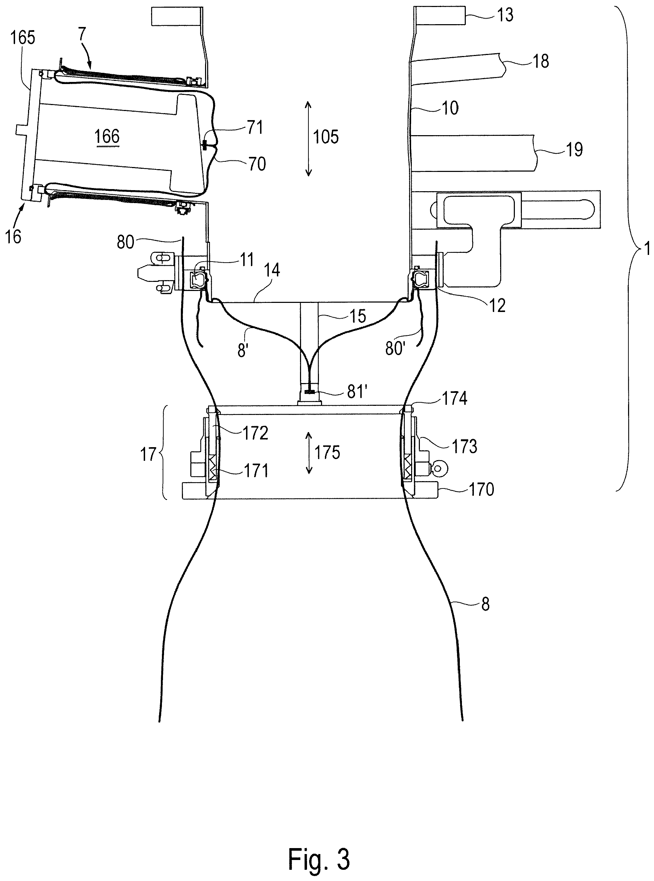

### Figur 3: Dritte Phase

Bei weiterhin aktiviertem ersten Spanner **11** und in beibehaltener beabstandeter Position der Anpresseinheit **17** ist ein neues Linerstück **8** durch die Anpresseinheit **17** in den offenen zweiten Spanner **12** eingeführt. Dann wird der zweite Spanner **12** geschlossen.

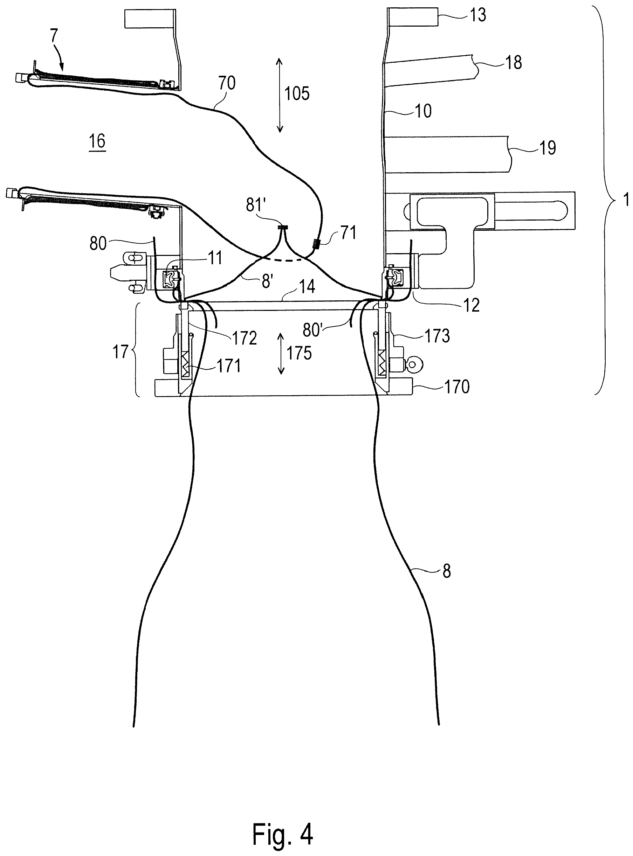

### Figur 4: Vierte Phase

Das Restende **80'** und das neue Linerstück **8** sind um den Röhrenrand **14** geführt. Das Basisteil **170** der Anpresseinheit **17** ist bis zu einer Klemmposition an die Leitröhre **10** herangefahren, so drückt die auf dem Pressteil **172** angeordnete Dichtung **174** das Restende **80'** und das neue Linerstück **8** somit jetzt durch die Kraft der Federung **171** nur mässig gegen den Röhrenrand **14.** Nun kann der erste Spanner **11** gelöst werden, während der zweite Spanner **12** fest geschlossen bleibt. Von der Transfereinheit **17** sind der Deckel **165** zusammen mit dem Stopfen **166** entfernt. Mittels des aktuellen vom Linervorrat **7** in die Leitröhre **10** vorgeschobenen Nutzabschnitts **70** wird der Linerrest **8'** ergriffen.

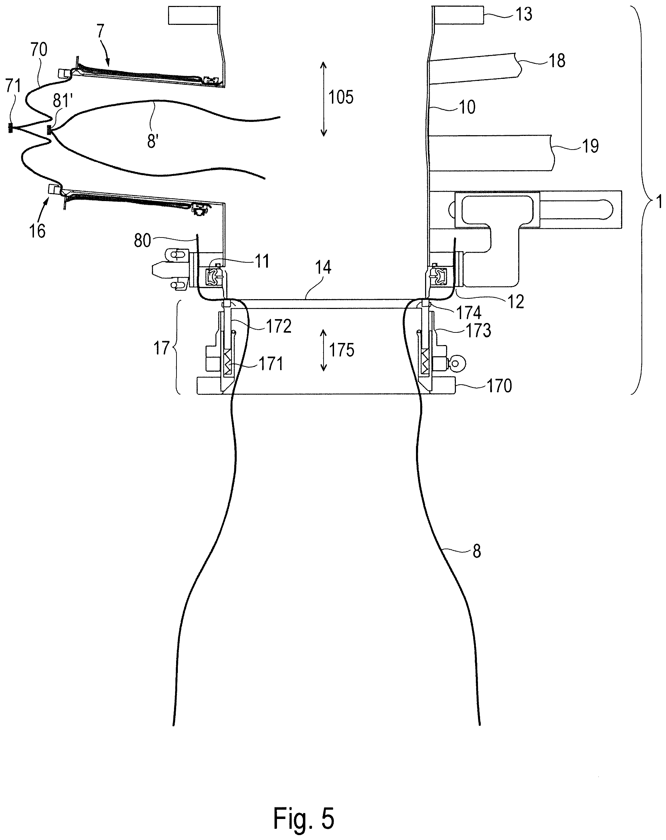

### Figur 5: Fünfte Phase

Bei beibehaltener Position der Anpresseinheit **17** mit weiterhin nur mässigem Anpressdruck der Dichtung **14** auf die Klemmstelle gegen den Röhrenrand **14** werden mittels des Nutzabschnitts **70** der ergriffene Linerrest **8'** samt der zweiten Abcrimpung **81'** aus dem gelösten ersten Spanner **11** und aus der Klemmstelle an der Dichtung **14** herausgezogen und in die Transfereinheit **16** hineingezogen. Damit beginnt der Nutzabschnitt **70** mit der daran vorhandenen ersten Abcrimpung **71** aus der Transfereinheit **16** herauszukommen. Der zweite Spanner **12** bleibt geschlossen, so dass das eingespannte Ende **80** des neuen Linerstücks **8** fest abgedichtet bleibt und keinesfalls mit herausgezogen wird.

### Figuren 6A und 6B: Sechste Phase

Der Nutzabschnitt **70** und der von diesem umgebene Linerrest **8'** sind vollständig aus der Transfereinheit **16** hinausgezogen. Mit Hilfe des vorgeschobenen Stopfelements **173** der Anpresseinheit **17** ist das Ende **80** des neuen Linerstücks **8** in den ersten gelösten Spanner schleifenförmig eingefalzt. Dabei wird weiterhin mit unveränderter Position der Anpresseinheit **17,** d.h. mit nur mässigem Anpressdruck der Dichtung **14** gearbeitet. Die für das Einfalzen zuzuführende nötige Materiallänge am Ende **80** des neuen Linerstücks **8** steht auf der Strecke zwischen der Dichtung **174** und dem geschlossenen zweiten Spanner **12** zur Verfügung. Während das Stopfelement **173** noch in der vorgeschobenen Einfalzposition steckt, wird der erste Spanner **11** bereits mässig aktiviert, um sicherzustellen, dass beim Zurückziehen des Stopfelements **173** die Einfalzung des Endes **80** im ersten Spanner **11** nicht mit herausgezogen wird.

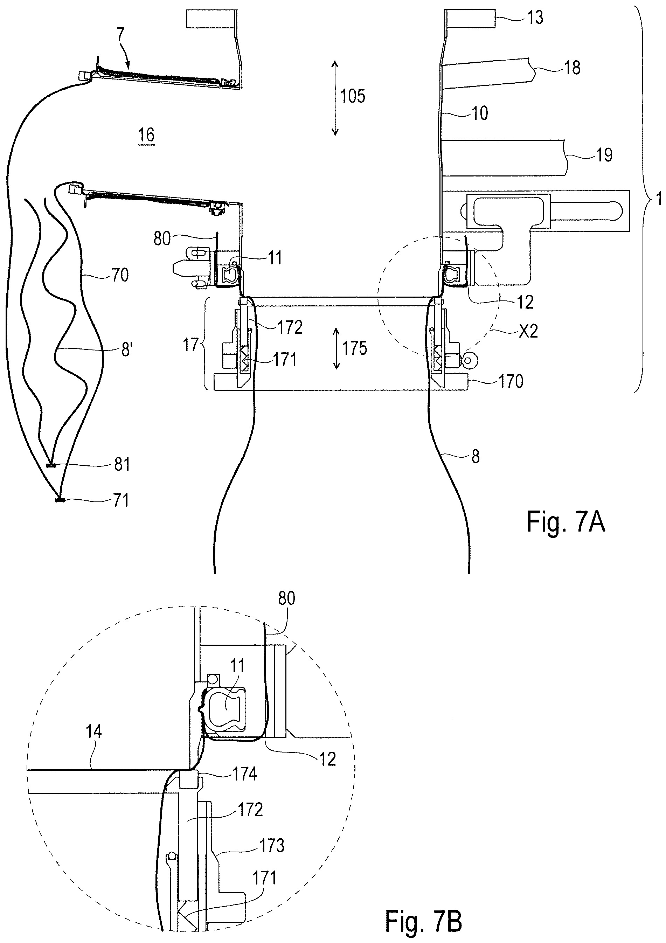

### Figuren 7A und 7B: Siebente Phase

Nun wird auch der erste Spanner **11** voll aktiviert und dadurch fest geschlossen. Das Stopfelement **173** steht in zurückgezogener Position. Die Einstellung des bisher mässigen Anpressdrucks der Dichtung **14** kann noch beibehalten werden.

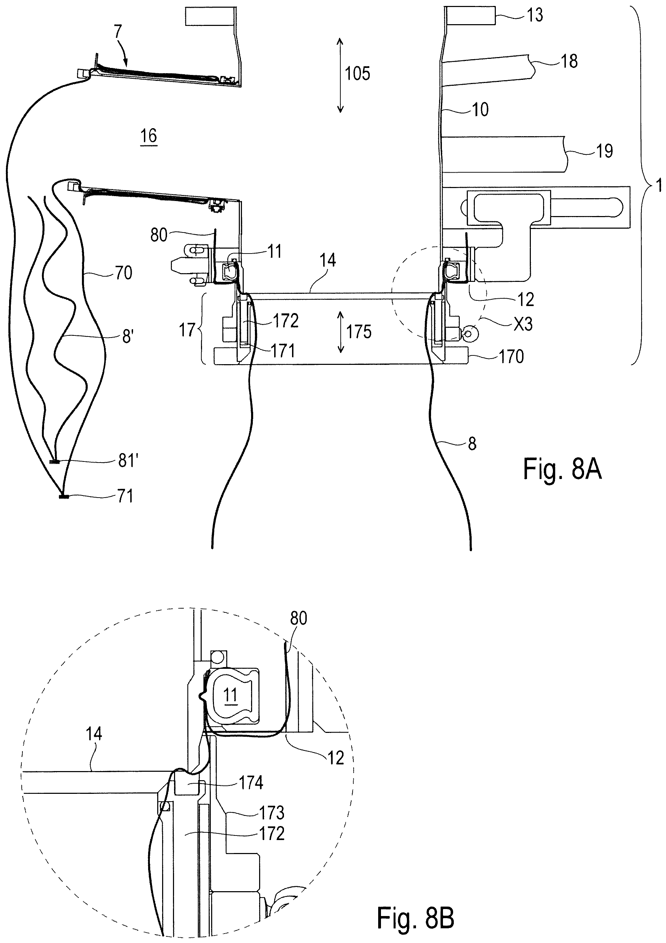

### Figuren 8A und 8B: Achte Phase

Beide Spanner **11,12** sind geschlossen. Das Basisteil **170** der Anpresseinheit **17** wird maximal an die Leitröhre **10** herangefahren, so wird das neue Linerstück **8** von der auf dem Pressteil **172** angeordneten Dichtung **174** gegen den Röhrenrand **14** der Leitröhre **10** fest dichtend angepresst. Die Federung **171** ist zusammengedrückt und so wirkt zusätzlich die über das Hubgestänge **15** ausgeübte Druckkraft auf die Dichtung **174.**

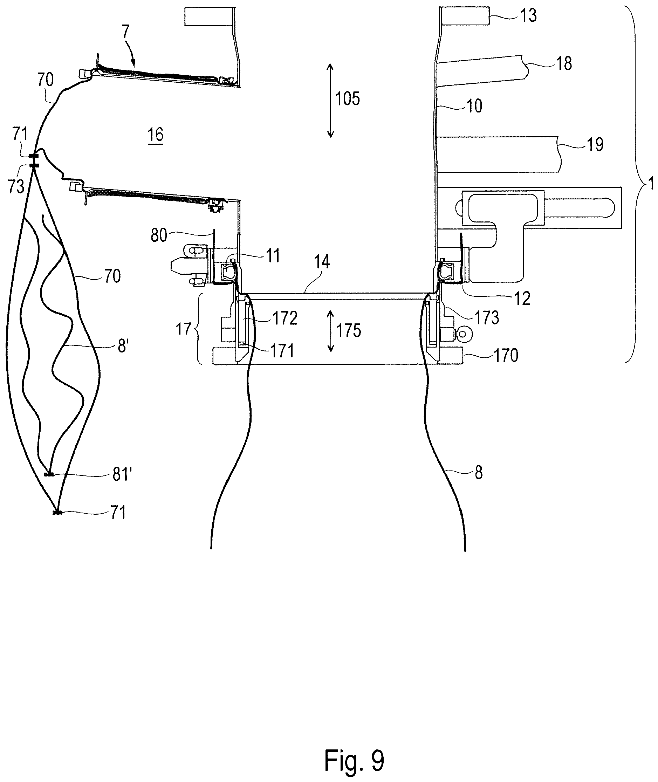

### Figur 9: Neunte Phase

Die Einstellungen an den Spannern **11,12** und die Stellung der Anpresseinheit **17** zur Generierung des festen Anpressdrucks der Dichtung **14,** wie in Figur 8 gemäss der achten Phase, bleiben unterändert. Am vollständig aus der Transfereinheit **16** herausgezogen Nutzabschnitt **70** mit dem darin enthaltenen Linerrest **8'** sind eine neue erste Abcrimpung **71** und nahe daran eine dritte Abcrimpung **73** angebracht, zwischen denen abgetrennt wird, um Nutzabschnitt **70** und Linerrest **8'** zu entsorgen.

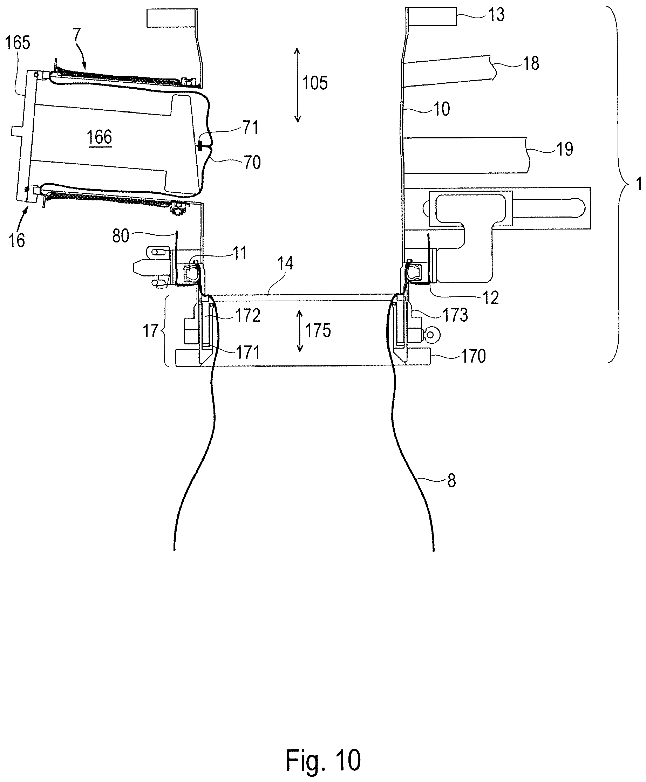

### Figur 10: Zehnte Phase - Beginn eines neuen Umfüllvorgangs

Durch Einschieben des Stopfens **166** in die Transfereinheit **16** wird ein neuer Nutzabschnitt **70** in Position gebracht und zugleich der Deckel **165** zum Verschliessen der Transfereinheit **16** aufgesetzt. Ein neuer Umfüllvorgang kann nun begonnen werden.

## Patentansprüche

1. Umfüllvorrichtung (**1**) zum kontaminationsgeschützten Überleiten von fliessfähigem Prozessmaterial zwischen einem ersten Behältnis (**A**) und einem zweiten Behältnis (**B**), umfassend:
a) eine Leitröhre (**10**) mit einem Axialdurchgang (**105**) für den Durchfluss des Prozessmaterials, welche an einem Ende ein Anschlussmittel (**13**) besitzt und am anderen Ende mit einem Röhrenrand (**14**) abschliesst;
b) eine in die Leitröhre (**10**) einmündende Transfereinheit (**16**), welche den Eingriff in die Leitröhre (**10**) erlaubt und auf der von einem schlauchförmigen Linervorrat (**7**) zumindest ein mit einer ersten Abcrimpung (**71**) versehener abziehbarer Nutzabschnitt (**70**) gespeichert ist;
c) einen ersten Spanner (**11**) mit der temporären Funktion abgedichtet zu fixieren:
ca) ein Restende (**80'**) eines von einem vorherigen Umfüllvorgang stammenden Linerrests (**8'**), der eine Sackform bildend, am anderen Ende mit einer zweiten Abcrimpung (**81'**) verschlossen ist; oder
cb) ein freies offenes Ende (**80**) eines neuen Linerstücks (**8**), das als sackförmiger Innenliner in das zweite Behältnis (**B**) führt;
d) einen zweiten Spanner (**12**), der zirkulär an der Leitröhre (**10**) und konzentrisch zum ersten Spanner (**11**) angeordnet ist, mit der temporären Funktion abgedichtet zu fixieren:
da) das Restende (**80'**); oder
db) das freie Ende (**80**) des neuen Linerstücks (**8**); und
e) eine axial gemäss Längserstreckung der Leitröhre (**10**) an einem Hubgestänge (**15**) verfahrbare Anpresseinheit (**17**) mit einem Axialdurchgang (**175**), um innerlich temporär den Linerrest (**8'**) und/oder das neue Linerstück (**8**) aufzunehmen, und einer Dichtung (**174**), welche die temporäre Funktion hat, allein das am Röhrenrand (**14**) anliegende Restende (**80**') oder dieses zusammen mit dem daran liegenden freien Ende (**80**) des neuen Linerstücks (**8**) oder allein das am Röhrenrand (**14**) anliegende freie Ende (**80**) des neuen Linerstücks (**8**) abgedichtet zu fixieren, **dadurch gekennzeichnet, dass**
f) die Anpresseinheit (**17**) ein mit dem Hubgestänge (**15**) fest verbundenes Basisteil (**170**) sowie ein sich am Basisteil (**170**) mittels einer Federung (**171**) elastisch abstützendes Pressteil (**172**) mit der an diesem angeordneten Dichtung (**174**) besitzt.

2. Umfüllvorrichtung (**1**) nach Anspruch 1, **dadurch gekennzeichnet, dass** die Anpresseinheit (**17**) ferner ein aktivierbares Stopfelement (**173**) umfasst, welches dazu dient, das freie Ende (**80**) des neuen Linerstücks **(8)** in den ersten Spanner (**11**) in Schleifenform einzufalzen.

3. Umfüllvorrichtung (**1**) nach einem der Ansprüche 1 und 2, **dadurch gekennzeichnet, dass** das Hubgestänge (**15**) dazu bestimmt ist, durch Verfahren des Basisteils (**170**) die am Pressteil (**172**) angeordnete Dichtung (**174**)**,** je nach Arbeitsphase der Umfüllvorrichtung (**1**):
a) gänzlich vom Röhrenrand (**14**) wegzubewegen, um das freie Ende **(80)** eines neuen Linerstücks (**8**) durch den Axialdurchgang (**175**) der Anpresseinheit (**17**) in den zweiten Spanner (**12**) einzuführen; oder
b) nur mit mässigem Druck das am Röhrenrand (**14**) anliegende freie Ende (**80**) des neuen Linerstücks (**8**) angedichtet zu fixieren; oder
c) nur mit mässigem Druck das am Röhrenrand (**14**) anliegende Restende (**80'**) zusammen mit dem daran liegenden freien Ende (**80**) des neuen Linerstücks (**8**) angedichtet zu fixieren, so dass ein bereits aus dem zweiten Spanner **(12)** gelöstes und nur mehr im ersten deaktivierten Spanner **(11)** klemmendes Restende (**80'**) herausziehbar ist; oder
d) mit maximalen Druck das am Röhrenrand (**14**) anliegende Restende (**80'**) oder das am Röhrenrand (**14**) anliegende freie Ende (**80**) des neuen Linerstücks (**8**) angedichtet zu fixieren.

4. Umfüllvorrichtung (**1**) nach einem der Ansprüche 1 bis 3, **dadurch gekennzeichnet, dass** an der Anpresseinheit **(17)** die maximale Länge des Weges der Federung (**171**) einstellbar ist.

5. Umfüllvorrichtung (**1**) nach einem der Ansprüche 1 bis 4, **dadurch gekennzeichnet, dass** die Funktion zumindest eines der beiden Spanner (**11,12**) auf Eigenelastizität oder einer Ansteuerung von aussen basiert.

6. Umfüllvorrichtung (**1**) nach Anspruch 5, **dadurch gekennzeichnet, dass**
a) der erste Spanner (**11**) als mit Mediendruck zu beaufschlagende, aktivierbare Blähdichtung ausgebildet ist oder eigenelastische Klemmbacken aufweist; und
b) der zweite Spanner (**12**) als eine in geschlossenem Zustand verengte und im offenen Zustand aufgeweitete Klammer beschaffen ist, die einen manuell betätigbaren Verschluss hat.

7. Umfüllvorrichtung (**1**) nach einem der Ansprüche 1 bis 6, **dadurch gekennzeichnet, dass**
a) der Nutzabschnitt (**70**) bis zu seiner Verwendung in der Transfereinheit (**16**) und mit seiner ersten Abcrimpung (**71**) hin zur Mündung in der Leitröhre (**10**) liegt und von einem Stopfen (**166**) an die Mündung heran vorgeschoben ist, der sich von aussen in die Transfereinheit (**16**) einführen lässt;
b) der Stopfen (**166**) aus der Transfereinheit (**16**) herausziehbar und mit einem vorsetzbaren Deckel (**165**) verbunden ist;
c) die Transfereinheit (**16**) in der Form eines von der Leitröhre (**10**) abgehenden Seitenstutzens ausgebildet ist und mit Gefälle mit einer Durchgangsöffnung in eine Wandung der Leitröhre (**10**) mündet.

8. Umfüllvorrichtung (**1**) nach einem der Ansprüche 1 bis 6, **dadurch gekennzeichnet, dass**
a) der vom Linervorrat (**7**) zur Verwendung gezogene Nutzabschnitt (**70**) sich durch die Transfereinheit (**16**) in den Axialdurchgang (**105**) der Leitröhre (**10**) einbringen lässt; und
b) dieser Nutzabschnitt (**70**) dazu bestimmt ist:
ba) den von einem vorherigen Umfüllvorgang stammenden Linerrest (**8'**), welcher nur mehr im ersten deaktivierten Spanner (**11**) und zwischen dem Röhrenrand (**14**) und dem freien Ende (**80**) eines neuen Linerstücks (**8**) abgedichtet von der mässig andrückenden Dichtung (**174**) der Anpresseinheit (**17**) herausziehbar hängt, zuerst zu ergreifen, isoliert zu ummanteln und nach aussen zu überführen; und schliesslich
bb) im vollständig aus der Transfereinheit (**16**) herausgezogenen Zustand mit dem darin enthaltenen Linerrest (**8'**), abseits vom eingeschlossenen Linerrest (**8'**), mit einer neuen ersten Abcrimpung (**71**) sowie einer dazu nahen dritten Abcrimpung (**73**) versehen zu werden, um zwischen den Abcrimpungen **(71,73)** den gebrauchten Nutzabschnitt (**70**) mit dem Linerrest (**8'**) abzutrennen und zu entsorgen; womit
c) ein neuer Nutzabschnitt (**70**) mit neuer erster Abcrimpung (**71**) entsteht, der sich mittels des Stopfens (**166**) in die Ausgangslage bringen lässt und so für einen nächsten Umfüllvorgang verfügbar ist.

9. Umfüllvorrichtung (**1**) nach einem der Ansprüche 1 bis 8, **dadurch gekennzeichnet, dass**
a) das erste Behältnis (**A**) direkt abgedichtet an ein Anschlussmittel (**13**) der Leitröhre (**10**) der Umfüllvorrichtung (**1**) angeschlossen ist und ein Container oder ein Bestandteil einer Produktionsanlage ist, wobei durch die Umfüllvorrichtung (**1**) geleitet, aus dem ersten Behältnis (**A**) Prozessmaterial zum zweiten Behältnis (**B**) überführt werden soll oder das erste Behältnis (**A**) mit Prozessmaterial aus dem zweiten Behältnis (**B**) beschickt werden soll; und andererseits
b) das zweite Behältnis (**B**) die Gestalt eines Bigbags oder eines Containers hat, welcher ein Linerstück (**8**) als sackförmigen Innenliner enthält, wobei durch die Umfüllvorrichtung (**1**) geleitet, aus dem zweiten Behältnis (**B**) Prozessmaterial zum ersten Behältnis (**A**) zu überführen ist oder das zweite Behältnis (**B**) mit Prozessmaterial aus dem ersten Behältnis (**A**) zu beschicken ist.

## Claims

1. Transfer device (1) for contamination-protected transfer of flowable process material between a first container (A) and a second container (B), comprising:
a) a guide tube (10) having an axial passage (105) for the flow of the process material, which guide tube has a connection means (13) at one end and terminates with a tube edge (14) at the other end;
b) a transfer unit (16) opening into the guide tube (10), which transfer unit (16) permits engagement into the guide tube (10) and on which at least one use-section (70) is stored, which is provided with a first crimping (71) and which can be peeled off from a tubular liner supply (7);
c) a first tensioner (11) with the temporary function to fix in a sealed manner:
ca) a residual end (80') of a liner residue (8') originating from a previous transfer operation, forming a bag shape, is closed at the other end with a second crimping (81'); or
cb) a free open end (80) of a new liner piece (8) leading into the second container (B) as a bag-shaped inner liner;
d) a second tensioner (12), arranged circularly on the guide tube (10) and concentric to the first tensioner (11), with the temporary function to fix in a sealed manner:
da) the residual end (80'); or
db) the free end (80) of the new liner piece (8); and
e) a pressing unit (17) which can be moved axially in accordance with the longitudinal extension of the guide tube (10) on a lifting linkage (15) and comprises an axial passage (175) for temporarily accommodating the liner residue (8') and/or the new liner piece (8) internally, and a seal (174) which has the temporary function to fix in a sealed manner solely the residual end (80') resting against the tube edge (14) or said end together with the free end (80) of the new liner piece (8) resting thereon or solely the free end (80) of the new liner piece (8) resting against the tube edge (14), **characterized in that**
f) the pressing unit (17) has a base part (170) firmly connected to the lifting linkage (15) and a pressing part (172) elastically supported on the base part (170) by means of a spring suspension (171) and having the seal (174) arranged thereon.

2. Transfer device (1) according to claim 1, **characterized in that** the pressing unit (17) further comprises an activatable plugging element (173) which serves to fold the free end (80) of the new liner piece (8) into the first tensioner (11) in loop form.

3. Transfer device (1) according to one of claims 1 and 2, **characterized in that** the lifting linkage (15) is designed, by moving the base part (170) and depending on the working phase of the transfer device (1):
a) to move the seal (174) arranged on the pressing part (172) completely away from the tube edge (14) to insert the free end (80) of a new liner piece (8) through the axial passage (175) of the pressing unit (17) into the second tensioner (12); or
b) to fix only with moderate pressure the free end (80) of the new liner piece (8) resting against the tube edge (14) in a sealed manner; or
c) to fix only with moderate pressure the residual end (80') resting against the tube edge (14) together with the free end (80) of the new liner piece (8) resting thereon in a sealed manner, so that a residual end (80') already released from the second tensioner (12) and only clamping in the first deactivated tensioner (11) can be pulled out; or
d) to fix the residual end (80') resting against the tube edge (14) or the free end (80) of the new liner piece (8) resting against the tube edge (14) in a sealed manner with maximum pressure.

4. Transfer device (1) according to one of claims 1 to 3, **characterized in that** the maximum length of the travel of the spring suspension (171) can be adjusted on the pressing unit (17).

5. Transfer device (1) according to one of claims 1 to 4, **characterized in that** the function of at least one of the two tensioners (11, 12) is based on inherent elasticity or external control.

6. Transfer device (1) according to claim 5, **characterized in that**
a) the first tensioner (11) is designed as an inflatable seal which can be activated by media pressure or has inherently elastic clamping jaws; and
b) the second tensioner (12) is in the form of a clamp which is narrowed in the closed state and widened in the open state and which has a manually operable closure.

7. Transfer device (1) according to one of claims 1 to 6, **characterized in that**
a) the use-section (70) lies in the guide tube (10) up to its use in the transfer unit (16) and with its first crimping (71) towards the mouth and is advanced towards the mouth by a plug (166) which can be inserted into the transfer unit (16) from the outside;
b) the plug (166) can be pulled out of the transfer unit (16) and is connected to a cover (165) that can be placed in front;
c) the transfer unit (16) is formed in the shape of a side branch extending from the guide tube (10) and opens at an incline with a through-opening into a wall of the guide tube (10).

8. Transfer device (1) according to one of claims 1 to 6, **characterized in that**
a) the use-section (70) drawn from the liner supply (7) for use can be introduced into the axial passage (105) of the guide tube (10) by the transfer unit (16); and
b) this use-section (70) is intended:
ba) to first grip, sheath in an insulating manner and transfer to the outside the liner residue (8') originating from a previous transfer operation, which liner residue (8') is suspended in a withdrawable manner only in the first deactivated tensioner (11) and between the tube edge (14) and the free end (80) of a new liner piece (8) sealed by the moderately pressing seal (174) of the pressing unit (17); and finally
bb) in the state completely pulled out of the transfer unit (16) with the liner residue (8') contained therein, away from the enclosed liner residue (8'), to be provided with a new first crimping (71) as well as a third crimping (73) close thereto, in order to separate and dispose of the used use-section (70) with the liner residue (8') between the crimpings (71, 73); whereby
c) a new use-section (70) with a new first crimping (71) is formed, which can be brought into the initial position by means of the plug (166) and is thus available for a next transfer operation.

9. Transfer device (1) according to one of claims 1 to 8, **characterized in that**
a) the first container (A) is directly connected in a sealed manner to a connection means (13) of the guide tube (10) of the transfer device (1) and is a container or a component of a production plant, wherein, conducted through the transfer device (1), process material is to be transferred from the first container (A) to the second container (B) or the first container (A) is to be charged with process material from the second container (B); and on the other hand
b) the second container (B) is in the form of a big bag or a container which contains a liner piece (8) as a bag-shaped inner liner, wherein, conducted through the transfer device (1), process material is to be transferred from the second container (B) to the first container (A) or the second container (B) is to be charged with process material from the first container (A).

## Revendications

1. Dispositif de transvasement (1) pour faire passer de manière à empêcher les contaminations un produit qui peut s'écouler entre un premier récipient (A) et un deuxième récipient (B), comprenant :
a) un tube de guidage (10) avec un passage axial (105) pour l'écoulement du produit, lequel tube possédant au niveau d'une extrémité un moyen de raccordement (13) et se terminant au niveau de l'autre extrémité avec un bord de tube (14) ;
b) une unité de transfert (16) débouchant dans le tube de guidage (10), laquelle unité de transfert permet un engagement dans le tube de guidage (10) et sur laquelle est stockée au moins une portion utile détachable (70) pourvue d'un premier sertissage (71) à partir d'une réserve tubulaire de revêtement (7) ;
c) un premier organe de serrage (11) ayant la fonction temporaire de fixer de façon étanche :
ca) une extrémité résiduelle (80') d'un reste de revêtement (8') provenant d'un processus de transvasement antérieur, formant une forme de sac, est fermée à l'autre extrémité avec un second sertissage (81') ; ou
cb) une extrémité ouverte libre (80) d'un nouveau morceau de revêtement (8) conduisant dans le deuxième récipient (B) comme revêtement intérieur en forme de sac ;
d) un deuxième organe de serrage (12), qui est disposé de façon circulaire sur le tube de guidage (10) et de façon concentrique par rapport au premier organe de serrage (11), avec la fonction temporaire de fixer de façon étanche :
da) l'extrémité résiduelle (80') ; ou
db) l'extrémité libre (80) du nouveau morceau de revêtement (8) ; et
e) une unité de pression (17) mobile axialement conformément à l'étendue longitudinale du tube de guidage (10) sur une tige de levage (15) et qui présente un passage axial (175) afin de recevoir temporairement à l'intérieur le reste de revêtement (8') et/ou le nouveau morceau de revêtement (8), et un joint (174) qui a la fonction temporaire de fixer de manière étanche uniquement l'extrémité résiduelle (80') reposant contre le bord de tube (14), ou cette dernière avec l'extrémité libre (80) du nouveau morceau de revêtement (8) reposant sur celle-ci, ou uniquement l'extrémité libre (80) du nouveau morceau de revêtement (8) reposant contre le bord de tube (14), **caractérisé en ce que**
f) l'unité de pression (17) comporte une partie de base (170) qui est reliée fermement à la tige de levage (15), et une partie de pression (172) qui s'appuie élastiquement sur la partie de base (170) au moyen d'un ressort (171) et sur laquelle est disposé le joint (174).

2. Dispositif de transvasement (1) selon la revendication 1, **caractérisé en ce que** l'unité de pression (17) comprend en outre un élément d'obturation activable (173) qui sert à plier en forme de boucle l'extrémité libre (80) du nouveau morceau de revêtement (8) dans le premier organe de serrage (11).

3. Dispositif de transvasement (1) selon l'une des revendications 1 et 2, **caractérisé en ce que** la tige de levage (15) est destinée, en déplaçant la partie de base (170), en fonction de la phase de travail du dispositif de transvasement (1) :
a) à éloigner complètement du bord de tube (14) le joint (174) agencé sur la partie de pression (172) afin d'insérer dans le deuxième organe de serrage (12) l'extrémité libre (80) d'un nouveau morceau de revêtement (8) à travers le passage axial (175) de l'unité de pression (17) ; ou
b) à fixer de façon étanche l'extrémité libre (80) du nouveau morceau de revêtement (8) reposant sur le bord de tube (14) uniquement avec une pression modérée ; ou
c) à fixer de façon étanche l'extrémité résiduelle (80') reposant sur le bord de tube (14) ainsi que l'extrémité libre (80) du nouveau morceau de revêtement (8) reposant sur celle-ci uniquement avec une pression modérée, de façon à pouvoir retirer une extrémité résiduelle (80') qui a déjà été libérée du deuxième organe de serrage (12) et qui n'est plus serrée que dans le premier organe de serrage (11) désactivé ; ou
d) à fixer de façon étanche l'extrémité résiduelle (80') reposant contre le bord de tube (14) ou l'extrémité libre (80) du nouveau morceau de revêtement (8) reposant sur le bord de tube (14) avec une pression maximale.

4. Dispositif de transvasement (1) selon l'une des revendications 1 à 3, **caractérisé en ce qu'**il est possible de régler la longueur maximale de la course du ressort (171) sur l'unité de pression (17).

5. Dispositif de transvasement (1) selon l'une des revendications 1 à 4, **caractérisé en ce que** la fonction d'au moins un des deux organes de serrage (11, 12) est basée sur l'élasticité propre ou une commande externe.

6. Dispositif de transvasement (1) selon la revendication 5, **caractérisé en ce que**
a) le premier organe de serrage (11) est conçu comme un joint d'étanchéité gonflable qui peut être activé et auquel une pression de fluide peut être appliquée ou possède des mâchoirs de serrage élastiques; et
b) le deuxième organe de serrage (12) est conçu comme une pince resserrée à l'état fermé et élargie à l'état ouvert, qui possède une fermeture actionnable manuellement.

7. Dispositif de transvasement (1) selon l'une des revendications 1 à 6, **caractérisé en ce que**
a) la portion utile (70) se trouve jusqu'à son utilisation dans l'unité de transfert (16) avec son premier sertissage (71) jusqu'à l'ouverture dans le tube de guidage (10), est poussée vers l'ouverture par un bouchon (166) qui peut être inséré dans l'unité de transfert (16) depuis l'extérieur ;
b) le bouchon (166) peut être retiré de l'unité de transfert (16) et est raccordé à un couvercle (165) pouvant être placé en avant ;
c) l'unité de transfert (16) est réalisée sous la forme d'un manchon latéral qui ressort du tube de guidage (10) et qui débouche de façon inclinée avec une ouverture de passage dans une paroi du tube de guidage (10).

8. Dispositif de transvasement (1) selon l'une des revendications 1 à 6, **caractérisé en ce que**
a) la portion utile (70) prélevée de la réserve de revêtement (7) peut être insérée dans le passage axial (105) du tube de guidage (10) par l'unité de transfert (16) ; et
b) cette portion utile (70) est destinée à :
ba) d'abord saisir le reste de revêtement (8') provenant d'un processus de transvasement antérieur qui est suspendu désormais dans le premier organe de serrage (11) désactivé et entre le bord de tube (14) et l'extrémité libre (80) d'un nouveau morceau de revêtement (8) étanché par le joint (174) de l'unité de pression (17) contraint modérément, à l'envelopper de façon isolée et le transférer vers l'extérieur ; et enfin bb) munir, à l'état complètement sorti de l'unité de transfert (16) avec dedans le reste de revêtement (8') et éloigné du reste de revêtement renfermé (8'), un nouveau premier sertissage (71) ainsi qu'à proximité un troisième sertissage (73) pour pouvoir séparer entre les sertissages (71, 73) la portion utile utilisée (70) avec le reste de revêtement (8') et pouvoir l'éliminer ; et
c) **en ce qu'**il en résulte une nouvelle portion utile (70) avec un nouveau premier sertissage (71), laquelle peut être amenée dans la position initiale au moyen du bouchon (166) et être ainsi disponible pour un prochain processus de transvasement.

9. Dispositif de transvasement (1) selon l'une des revendications 1 à 8, **caractérisé en ce que**
a) le premier récipient (A) est relié directement de façon étanche à un moyen de raccordement (13) du tube de guidage (10) du dispositif de transvasement (1) et **en ce qu'**il s'agit d'un conteneur ou d'une partie d'une installation de production, le produit devant être transféré, via le dispositif de transvasement (1), du premier récipient (A) au deuxième récipient (B) ou le premier récipient (A) devant être rempli de produit provenant du deuxième récipient (B), et d'autre part
b) le deuxième récipient (B) se présente sous la forme d'un bigbag ou d'un conteneur, qui contient un morceau de revêtement (8) comme revêtement intérieur en forme de sac, le produit devant être transféré, via le dispositif de transvasement (1), du deuxième récipient (B) au premier récipient (A), ou le deuxième récipient (B) devant être rempli de produit provenant du premier récipient (A).
